(19) Europäisches Patentamt
European Patent Office
Office européen des brevets

(11) **EP 4 206 159 A1**

(12) **EUROPEAN PATENT APPLICATION**

(43) Date of publication:
**05.07.2023 Bulletin 2023/27**

(21) Application number: **21218370.1**

(22) Date of filing: **30.12.2021**

(51) International Patent Classification (IPC):
**C04B 28/10** $^{(2006.01)}$ **C04B 28/30** $^{(2006.01)}$
**C04B 28/32** $^{(2006.01)}$ **C09K 8/467** $^{(2006.01)}$

(52) Cooperative Patent Classification (CPC):
(C-Sets available)
**C09K 8/467; C04B 28/10; C04B 28/105;**
**C04B 28/30; C04B 28/32** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Halliburton Energy Services, Inc. Houston, TX 77032-3219 (US)**

(72) Inventors:
• **Lewis, Samuel J.**
  **Houston, 77032 (US)**
• **Eoff, Larry Steven**
  **Houston, 77032 (US)**
• **George, Shoy**
  **411001 Pune (IN)**

(74) Representative: **McWilliams, David John Withers & Rogers LLP 2 London Bridge London SE1 9RA (GB)**

(54) **WATER PROOFING AGENTS FOR SOREL CEMENT IN HORIZONTAL WELL APPLICATIONS**

(57) A variety of methods, systems, and compositions are disclosed, including, in one embodiment, a method comprising: introducing a Sorel cement composition into a subterranean formation, wherein the Sorel cement composition comprises an alkaline earth metal oxide, a soluble salt, a water-proofing agent, and water, wherein the water-proofing agent comprises an organically modified clay, crystalline silica, or a combination thereof; and allowing the Sorel cement composition to set in the subterranean formation.

**FIG.1**

(52) Cooperative Patent Classification (CPC): (Cont.)

C-Sets
**C04B 28/10, C04B 14/06, C04B 22/08,
C04B 24/38, C04B 24/38, C04B 24/425;
C04B 28/105, C04B 14/06, C04B 22/08,
C04B 24/38, C04B 24/38, C04B 24/425;
C04B 28/30, C04B 14/06, C04B 22/08,
C04B 24/38, C04B 24/38, C04B 24/425;
C04B 28/32, C04B 14/06, C04B 24/38,
C04B 24/38, C04B 24/425;
C04B 28/32, C04B 2103/44, C04B 2103/65**

**Description**

**BACKGROUND**

When performing a subterranean treatment operation, it may be desirable to temporarily or permanently block or divert the flow of a fluid within at least a portion of the subterranean formation by forming a fluid seal therein. Whether the fluid seal is intended to be temporary or permanent may determine the type of agent used in its formation. Illustrative fluid blocking and diversion operations can include, without limitation, fluid loss control operations, kill operations, conformance control operations, and the like. The fluid that is being blocked or diverted may be a formation fluid that is natively present in the subterranean formation, such as petroleum, gas, or water. In other cases, the fluid that is being blocked or diverted may be a treatment fluid. In some cases, treatment fluids may be formulated to be self-diverting, such that they are automatically directed to a desired location within the subterranean formation.

Providing effective fluid loss control during subterranean treatment operations may be highly desirable. The term "fluid loss," as used herein, refers to the undesired migration or loss of fluids into a subterranean formation and/or a particulate pack. Fluid loss may be problematic in a number of subterranean operations including, for example, drilling operations, fracturing operations, acidizing operations, gravel-packing operations, workover operations, chemical treatment operations, wellbore clean-out operations, and the like. In fracturing operations, for example, fluid loss into the formation matrix may result in incomplete fracture propagation. Formation of a fluid seal in such treatment operations may mitigate the migration of a fluid into an unwanted location of the subterranean formation. Likewise, in the reverse of a fluid loss event, incomplete fluid blocking may result in production of an unwanted fluid from one or more zones of a subterranean formation. For example, incomplete formation of a fluid seal may result in the unwanted incursion of formation water or brine into a wellbore, which may decrease the value of a hydrocarbon resource produced therefrom.

Lost circulation treatments involving various plugging materials such as walnut hulls, mica and cellophane have been used to prevent or lessen the loss of fluids from wellbores. The disadvantages of such treatments include the potential for damage to subterranean formations as a result of the inability to remove the plugging materials therefrom, and the dislodgement of the plugging materials from highly permeable zones whereby fluid losses subsequently resume. Cement compositions may also be used to seal cracks or holes in pipe strings or cement sheaths, to seal highly permeable formation zones or fractures, to place a cement plug, and the like. One technique for preventing lost circulation problems has been to temporarily plug voids or permeable zones with Sorel cement compositions. Sorel cement compositions typically include magnesium oxide and a chloride or phosphate salt which together form, for example, magnesium oxychloride.

**BRIEF DESCRIPTION OF THE DRAWINGS**

These drawings illustrate certain aspects of some of the embodiments of the present disclosure and should not be used to limit or define the disclosure.

FIG. 1 is a schematic diagram that illustrates a system for preparation and delivery of a cement composition in accordance with certain examples in the present disclosure.
FIG. 2A is a schematic diagram that illustrates surface equipment that may be used for introduction and placement of a cement composition including in accordance with certain examples in the present disclosure.
FIG. 2B is a schematic diagram that illustrates placement of a cement composition into a wellbore annulus in accordance with certain examples in the present disclosure.

**DETAILED DESCRIPTION**

Disclosed herein are methods, compositions, and systems relating to subterranean cementing operations, and, more particularly, to subterranean cementing operations including magnesium oxychloride (Sorel) cement compositions including organically modified clays or crystalline silica as water-proofing agents.

Sorel cement compositions may include magnesia-based cement systems formed from a mixture of magnesium oxide and magnesium chloride. However, as used herein, the term "Sorel cement composition" may encompass cements formed from any of a variety of metal oxides and soluble salts which together form a settable cement composition. In the presence of water, the metal oxide and the soluble salt forming the Sorel cement composition may solidify into a hardened mass. Sorel cement compositions may rapidly develop a desirable compressive strength. However, Sorel cement composition may rapidly degrade (fall apart) when immersed in water.

Sorel cement composition's resistance to water depends upon a transformation of a hydroxychloride hydrates to insoluble carbonates and may be improved by the incorporation of certain additives. These additives may be inorganic, such as phosphates, borax and calcium sulfate-silicate mixtures, or organic, such as resins, melamine urea and formaldehyde. However, these additives may not be acceptable for use in environmentally regulated areas such as, for example, the North Sea. According to the present disclosure, a surprising result may be achieved by essentially substituting conventional water-proofing agents for organically modified clay and/or crystalline silica in that the Sorel cements can have acceptable water resistance while also providing acceptable environmental characteristics. The organically modified clay or silica may stabilize the Sorel cement composition while having environmental characteristics that are acceptable in regulated areas.

Sorel cement compositions according to the present disclosure may include an alkaline earth metal oxide, a soluble salt, a water-proofing agent, and water, wherein the water-proofing agent includes an organically modified clay, silica, or a combination thereof. Additional additives may be included in the Sorel cement composition as desired by one of ordinary skill in the art.

The Sorel cement composition may include a metal oxide. In some examples, the Sorel cement may include an alkaline earth metal oxide, such as magnesium oxide, zinc oxide, or aluminum oxide. Another example of a suitable metal oxide includes zinc oxide. The metal oxide present in the Sorel cement may have an activity level sufficient to provide the desired reactivity. For example, the higher the activity level of the metal oxide, the faster the reaction of the metal oxide with the other components of the Sorel cement to form the hardened mass. The activity level of the metal oxide may vary based on a number of factors. For example, the particle size differential of the metal oxide particles may affect the activity level. A smaller particle size differential may result in a higher activity level due, inter alia, to a greater surface area. Another factor that may affect the activity level of the metal oxide is a sintering process. By varying the heat applied during the sintering process, metal oxide with varying activity levels may be provided. Metal oxide that has not been treated by a sintering process may have a very high activity level, and thus it may be highly reactive in the Sorel cements. In an embodiment, a relatively more reactive metal oxide may be desired, such as where it may be desired to have a cement composition with a relatively short set time, for example, when desired to rapidly seal off a permeable zone. In an alternative embodiment, a relatively less reactive metal oxide may be desired, for example, where a delay may be desired between mixing the cement composition and the formation of a hardened mass.

The metal oxide may be present in the Sorel cement composition in any suitable amount. In some embodiments, the metal oxide may be present in the Sorel cement composition an amount of about 5% to about 50% by weight of the Sorel cement composition, including about 5% to about 40%, about 5% to about 20%, about 5% to about 10%, about 10% to about 50%, or about 30% to about 50%. One of ordinary skill in the art, with the benefit of this disclosure, should recognize the appropriate amount of the metal oxide to include for a chosen application.

A wide variety of soluble salts are suitable for use in the Sorel cement compositions, including metal chlorides. In some examples, the Sorel cement may include an alkaline earth metal chloride, such as magnesium chloride and zinc chloride. In an alternative embodiment, the Sorel cement includes magnesium sulfate or ammonium mono or dibasic phosphate. The soluble salt may be present in the Sorel cement composition in any suitable amount. In some embodiments, the soluble salt may be present in the Sorel cement composition in an amount of about 5% to about 50% by weight of the Sorel cement composition, including about 5% to about 40%, about 5% to about 20%, about 5% to about 10%, about 10% to about 50%, about 30% to about 50%, about 10% to about 40%, or about 20% to about 40%. One of ordinary skill in the art, with the benefit of this disclosure, should recognize the appropriate amount of the soluble salt to include for a chosen application.

The Sorel cement may include the metal oxide and the soluble salt in a metal oxide to soluble salt ratio of about 3:1 to about 1:3. In some examples, the metal oxide to soluble salt ratio may range from about 2:1 to about 1:2. In other examples, the metal oxide to soluble salt ratio may range from about 1.5:1 to about 1:1.5. One of ordinary skill in the art will recognize the appropriate ratio of the metal oxide and soluble salt to include for a particular application.

The metal oxide and metal chloride should react to form a hardened mass. For example, a metal oxide (e.g., magnesium oxide powder) may be combined with a solution of magnesium chloride, thereby forming the principal phases of $Mg_3(OH)_5Cl.4H_2O$ and $Mg_2(OH)_3Cl.4H_2O$. Two additional phases may be also formed including $Mg_2OHClCO_3.H_2O$ and $Mg_5(OH)_2(CO_3)_4.4H_2O$. Dissolution of the magnesium in the magnesium chloride solution leads to formation of a gel and occurs before the crystallization of the other hydrates takes place. While the resulting cement may have desirable compressive strength and sealant properties, among others, it may be susceptible to degradation, for example, from water. Accordingly, water proofing agents can be included in the Sorel cement composition in accordance with present embodiments.

Examples of suitable water-proofing agents include organically modified clays, crystalline silica, and combinations thereof. As previously described, these water-proofing agents may have acceptable environmental ratings thus allowing their use in regions where conventional water-proofing agents may be limited. For example, the water-proofing agents may have a yellow or green environmental rating such that the resultant Sorel cement composition may also have a yellow or green environmental rating.

Organically modified clays are natural clays with replacement at least a portion of their exchangeable inorganic cations being replaced with organic cations. Organic cations used in this replacement process may be able to adsorb other organic compounds. Thus, the organically modified clay may adsorb organic constituents that may be otherwise unaffected or possibly adversely affected by unmodified clays. For replacement with organic cations, a clay may be treated with quaternary ammonium salts. Suitable quaternary ammonium salts may include Examples of suitable quaternary ammonium salts may include four alkyl groups on the ammonium salt. Two of the alkyl group may have 6 or less carbons atoms while the other two carbons may be longer chain alkyl groups that are highly organic/fatty lipid-type groups, for example, having a chain length of from 14 carbons to 24 carbons. Specific examples of suitable quaternary ammonium salts may include dimethylditallow ammonium chloride, dibenzylditallow ammonium chloride, or methyl benzyl ditallow ammonium chloride. Organically modified clays may for a stable mass having improved bearing properties and a reduced potential for leaching hazardous constituents into the environment. According to the present disclosure, organically modified clays may include organically modified montmorillonite clay, organically modified hectorite clay, organically modified sepiolite clay, and organically modified attapulgite clay, among others.

Crystalline silica may also be used as the water-proofing agent either alone or in combination with the organically modified clay. Crystalline silica is available in many forms with quartz being one suitable source. The crystalline silica may have any suitable particle size, including a particle size of about 1 micron to about 500 microns, for example, about 50 microns to about 200 microns. As used herein, the particle size of the crystalline silica corresponds to d50 values as measured by commercially available particle size analyzers such as those manufactured by Malvern Instruments, Worcestershire, United Kingdom.

The water-proofing agent may be included in the Sorel cement compositions in any suitable amount. For example, the water-proofing agent may be present in the Sorel cement compositions in an amount of about 5% to about 30% by weight of the cement composition, including an amount of about 5% to about 10%, about 5% to about 20%, about 10% to about 20%, or about 10% to about 30%. One of ordinary skill in the art, with the benefit of this disclosure, should recognize the appropriate amount of the water-proofing agent to include for a chosen application.

The water that may be used in Sorel cement compositions may include freshwater, saltwater (e.g., water containing one or more salts dissolved therein), brine (e.g., saturated saltwater produced from subterranean formations), seawater, or combinations thereof. Generally, the water may be from any source, provided that the water does not contain an excess of compounds that may undesirably affect other components in the Sorel cement composition. In some examples, the water may be included in an amount sufficient to form a pumpable slurry. The water may be present in the Sorel cement composition an amount of about 20% to about 40% by weight of the Sorel cement composition. One of ordinary skill in the art, with the benefit of this disclosure, should recognize the appropriate amount of water to include for a chosen application.

Optionally, other additional additives may be added to the Sorel cement compositions as deemed appropriate by one skilled in the art, with the benefit of this disclosure. Examples of such additives may include fillers, viscosifiers, accelerators, and weighting agents. Fillers can be used, in some embodiments, to modify the particle size distribution of the composition, for example to prevent packing of the preferred ultra-fine metal oxide particles. Undue packing can impair the flow of the Sorel cement composition. Increasing the particle size distribution with fillers can minimize packing and contribute to flow. The fillers may also be provided to add greater suspension properties for weight additives at lower weights and can be selected to aid in packing off micro fractures in the wellbore. An example of a suitable filler includes dolomite powder ($MgCaCO_3$).

In some examples, the Sorel cement compositions may include a viscosifier. Examples of suitable viscosifiers include polysaccharide-hydroxyethyl cellulose, carboxymethyl hydroxypropyl guar, hydroxypropyl guar, derivatized hydroxyethyl cellulose, and biopolymers, such as xanthan and diutan. Combinations of suitable viscosifiers may be used in some embodiments. The viscosifier may be present in the Sorel cement composition in any suitable amount. In some embodiments, the viscosifier may be present in the Sorel cement composition in an amount of from about 0.05% to about 5% by weight of the Sorel cement composition. Alternatively, the viscosifier may be present in an amount of about 0.05% to about 5%, about 0.05% to about 4%, about 0.05% to about 3.5%, about 0.05 to about 3%, about 0.05% to about 2.5%, about 0.05% to about 2%, about 0.05% to about 1.5%, about 0.05% to about 1%, about 0.05 to about 0.5% by weight of the Sorel cement composition.

Set retarders for delaying the time in which the phase transition occurs may also be included in the Sorel cement composition in accordance with one or more embodiment. Set retarders can allow the operator to have more control over the set time of the Sorel cement composition based on the geothermal temperature at which the composition will be used. Increasing the weight percentage of the set retarder should increase the time required for the Sorel cement composition to undergo the phase transition. The set retarder may be used in any suitable amount. For example, the set retarder may be present in the Sorel cement composition in an amount of about 0.5% to about 10% by weight of the metal oxide. Examples of suitable set retarders include sodium hexametaphosphate, potassium magnesium phosphate hexahydrate, and potassium magnesium hexametaphosphate. Mixtures of these set retarders may also be used. The set retarders may be water soluble and can be added to the water before addition of the soluble salt to the water. The set retarder can be added at other times, such as after formation of the brine.

Accelerating agents for increasing the rate at which the flowable slurry forms the solid mass may also be incorporated into the Sorel cement composition, in accordance with one or more embodiments. Where used, the accelerating agent may be present in the Sorel cement composition in an amount of about 1% to 10% by weight of the Sorel cement composition. An example of a suitable accelerating agent includes aluminum sulfate.

A weighting agent may also be included in the Sorel cement composition in accordance with one or more embodiments. Weights agents may be used, for example, to control slurry mass and/or density. Control of slurry mass can be important for positioning the Sorel cement composition properly in the wellbore. Slurry mass and density generally should be sufficient to displace pressurized and dense fluids in the wellbore. Examples of suitable weighting agents include calcium carbonate, barite, galena, and combinations thereof.

The Sorel cement compositions as described herein may include properties that would be beneficial for use in downhole sealant applications, including lost circulation control, water shutoff, and plugging operations, among others. For example, the Sorel cement compositions may develop static gel strength in a short time frame enabling them to be effective at lost circulation control and water shutoff. By way of further example, the Sorel cement compositions may set to form a hardened mass with sufficient compressive strength to support well structures. Additionally, the Sorel cement compositions may be thixotropic (e.g., shear-thinning or shear-sensitive) so that the fluids should remain pumpable long enough for placement, but when static, should develop gel strength quickly.

A method of subterranean treatment may be provided. The method may include introducing a Sorel cement composition as described herein into lost circulation treatment fluid into a subterranean formation and allowing the Sorel cement composition to set in the subterranean formation. Introduction of the Sorel cement composition into a subterranean formation includes introducing into a wellbore in the subterranean formation or into a formation zone, such as water-producing zone or a lost circulation zone. For example, the Sorel cement composition may be placed into a lost circulation zone to form a seal that reduces loss of fluid circulation into the lost circulation zone. By way of further example, the Sorel cement composition may be placed into a water-producing zone to form a seal that reduces water production from the water-producing zone. The Sorel cement composition used in this method of subterranean treatment may contain the various features of the embodiments of the Sorel cement composition used described herein. The Sorel cement compositions disclosed herein may be used in any suitable life-cycle stage of a wellbore, such as, for example, during a drilling operation, a completion operation, or a production stage, etc.

The Sorel cement composition used may be a thixotropic shear-thinning fluid. A thixotropic fluid is generally described as a fluid that becomes more viscous when flow ceases. It often may develop a gel that requires a sufficient shear stress to overcome this static gelling phenomenon, in order for flow to begin. Once flow begins, a shear thinning or pseudoplastic fluid is one whose apparent viscosity (apparent viscosity being defined as the ratio of shear stress to shear rate) decreases as shear rate increases. Dilatant (shear thickening) fluids are those whose apparent viscosity increases as shear rate increases. The Herschel-Bulkley (HB) fluid model can be used to viscometrically classify fluids both as shear-thinning (pseudoplastic) or shear thickening (dilatant). The HB model is expressed by the following equation:

$$\tau = \mu_\infty \gamma^n + \tau_0$$

where $\tau$ is the shear stress, $\mu_\infty$ is the consistency coefficient of the fluid, $\gamma$ is the shear rate, n is the shear-thinning index, and $\tau_0$ is the yield stress. A shear-thinning index of less than 1 indicates that the fluid is shear-thinning, whereas a value of n that is greater than 1 indicates that the fluid is shear-thickening. Thus, a shear-thinning fluid must have a shear-thinning index of less than 1 when measured according to the Herschel-Bulkley model. The thixotropic and shear-thinning dual nature of Sorel cement composition will therefore remain fluid while exposed to the agitation of pumping (or any other agitation), however, when the Sorel cement composition flows into a subterranean zone and away from a source of agitation the Sorel cement composition should thicken to seal the subterranean zone and prevent fluid migration into (or from) the subterranean zone.

In lost circulation embodiments, a Sorel cement composition as described herein may be used. As previously mentioned, lost circulation zones are often encountered into which drilling fluid may be lost. As a result, drilling typically must be terminated with the implementation of remedial procedures, for example. In accordance with embodiments, the lost circulation treatment fluids may be used to seal the lost circulation zones to prevent the uncontrolled flow of treatment fluids into or out of the lost circulation zones, e.g., lost drilling fluid circulation, crossflows, underground blow-outs and the like. In some embodiments, a Sorel cement composition as described herein may prepared. After preparation, the Sorel cement composition may be introduced into the lost circulation zone. In an embodiment, the Sorel cement composition is pumped through one or more openings at the end of the string of drill pipe. For example, the Sorel cement composition may be pumped through the drill bit. Once placed into the lost circulation treatment zone, the Sorel cement composition should set to form a hardened mass inside the lost circulation zone. This hardened mass should seal the zone and control the loss of subsequently pumped drilling fluid, which allows for continued drilling. In addition to drilling fluids, embodiments of the Sorel cement composition may also be used to control lost circulation problems encountered with other treatment fluids, for example, spacer fluids, completion fluids (e.g., completion brines), fracturing fluids, and cement compositions (set-delayed or otherwise) that may be placed into a wellbore.

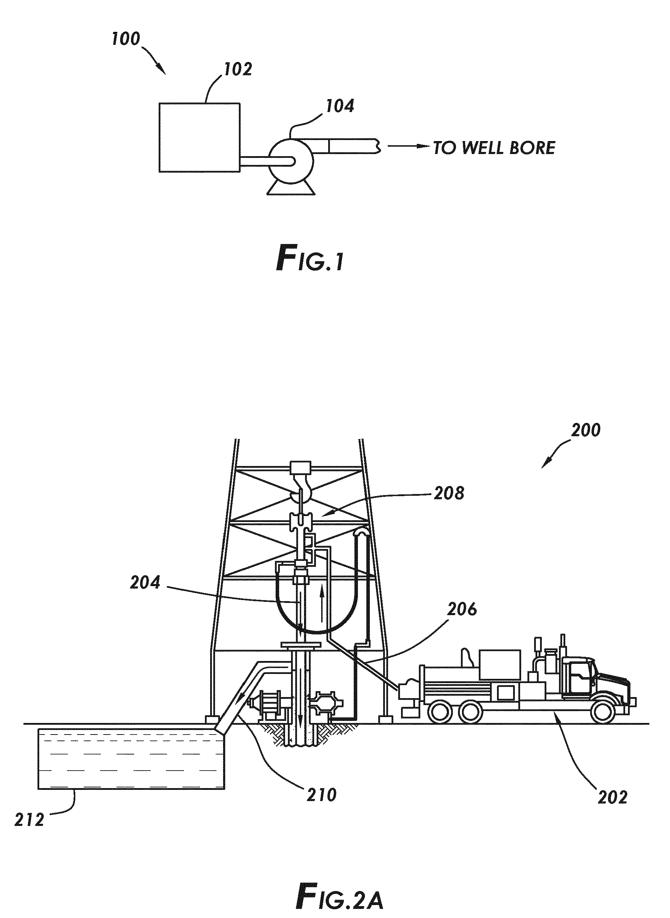

FIG. 1 is a schematic diagram that illustrates a system 100 for preparation and delivery of a Sorel cement composition including waterproofing agents as described herein in accordance with certain examples in the present disclosure. As shown, the cement composition may be mixed in mixing equipment 102, such as a jet mixer, re-circulating mixer, or a batch mixer, for example, and then pumped via pumping equipment 104 to the wellbore. In some systems, methods and compositions, the mixing equipment 102 and the pumping equipment 104 may be disposed on one or more cement trucks as will be apparent to those of ordinary skill in the art. In some systems, methods and compositions, a jet mixer may be used, for example, to continuously mix the Sorel cement composition including waterproofing agents with yellow/green environmental ratings as it is being pumped to the wellbore.

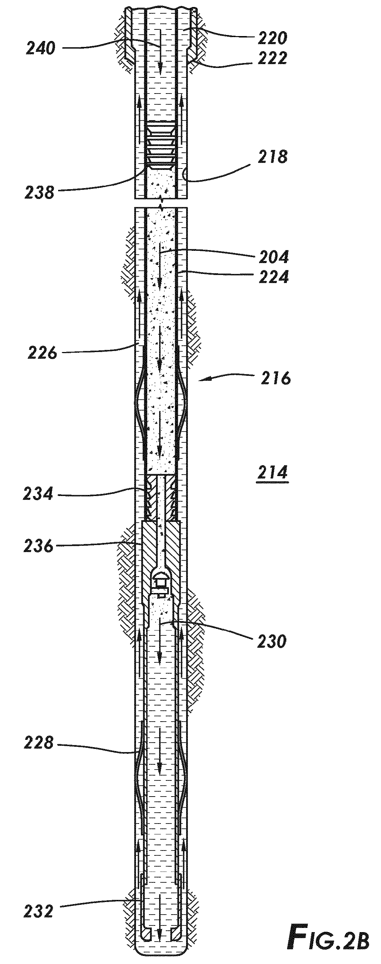

An example technique for placing a Sorel cement composition including waterproofing agents as described into a subterranean formation will now be described with reference to FIGS. 2A and 2B. FIG. 2A is a schematic diagram that illustrates surface equipment 200 that may be used for introduction and placement of the Sorel cement composition including waterproofing agents with yellow/green environmental ratings into a subterranean formation in accordance with certain examples in the present disclosure. It should be noted that while FIG. 2A generally depicts a land-based operation, those skilled in the art will readily recognize that the principles described herein are equally applicable to subsea operations that employ floating or sea-based platforms and rigs, without departing from the scope of the disclosure. As illustrated by FIG. 2A, the surface equipment 200 may include a cementing unit 202, which may include one or more cement trucks. The cementing unit 202 may include mixing equipment 102 and pumping equipment 104 (e.g., FIG. 1) as will be apparent to those of ordinary skill in the art. The cementing unit 202 may pump a Sorel cement composition 204 through a feed pipe 206 and to a cementing head 208 which conveys the Sorel cement composition 204 downhole.

Turning now to FIG. 2B, wherein FIG. 2B is a schematic diagram that illustrates placement of a Sorel cement composition 204 into a wellbore annulus in accordance with certain examples in the present disclosure. The Sorel cement composition 204 may be placed into a subterranean formation 214 in accordance with example systems, methods and cement compositions. As illustrated, a wellbore 216 may be drilled into the subterranean formation 214. While wellbore 216 is shown extending generally vertically into the subterranean formation 214, the principles described herein are also applicable to wellbores that extend at an angle through the subterranean formation 214, such as horizontal and slanted wellbores. As illustrated, the wellbore 216 includes walls 218. In the illustration, a surface casing 220 has been inserted into the wellbore 216. The surface casing 220 may be cemented to the walls 218 of the wellbore 216 by cement sheath 222. In the illustration, one or more additional conduits (e.g., intermediate casing, production casing, liners, etc.), shown here as casing 224 may also be disposed in the wellbore 216. As illustrated, there is a wellbore annulus 226 formed between the casing 224 and the walls 218 of the wellbore 216 and/or the surface casing 220. One or more centralizers 228 may be attached to the casing 224, for example, to centralize the casing 224 in the wellbore 216 prior to and during the cementing operation.

With continued reference to FIG. 2B, the Sorel cement composition 204 may be pumped down the interior of the casing 224. The Sorel cement composition 204 may be allowed to flow down the interior of the casing 224 through the casing shoe 232 at the bottom of the casing 224 and up around the casing 224 into the wellbore annulus 226. The Sorel cement composition 204 may be allowed to set in the wellbore annulus 226, for example, to form a cement sheath that supports and positions the casing 224 in the wellbore 216. While not illustrated, other techniques may also be utilized for introduction of the Sorel cement composition 204. By way of example, reverse circulation techniques may be used that include introducing the Sorel cement composition 204 into the subterranean formation 214 by way of the wellbore annulus 226 instead of through the casing 224. By way of further example, the Sorel cement composition 204 may be placed into the wellbore 216 at stages, such as during drilling or production, for example.

As it is introduced, the Sorel cement composition 204 may displace other fluids 230, such as drilling fluids and/or spacer fluids that may be present in the interior of the casing 224 and/or the wellbore annulus 226. At least a portion of the displaced fluids 230 may exit the wellbore annulus 226 via a flow line 210 and be deposited, for example, in one or more retention pits 212 (e.g., a mud pit), as shown on FIG. 2A. Referring again to FIG. 2B, a bottom plug 234 may be introduced into the wellbore 216 ahead of the Sorel cement composition 204, for example, to separate the Sorel cement composition 204 from the fluids 230 that may be inside the casing 224 prior to cementing. After the bottom plug 234 reaches the landing collar 236, a diaphragm or other suitable device should rupture to allow the Sorel cement composition 204 through the bottom plug 234. In FIG. 2B, the bottom plug 234 is shown on the landing collar 236. In the illustration, a top plug 238 may be introduced into the wellbore 216 behind the Sorel cement composition 204. The top plug 238 may separate the Sorel cement composition 204 from a displacement fluid 240 and also push the Sorel cement composition 204 through the bottom plug 234.

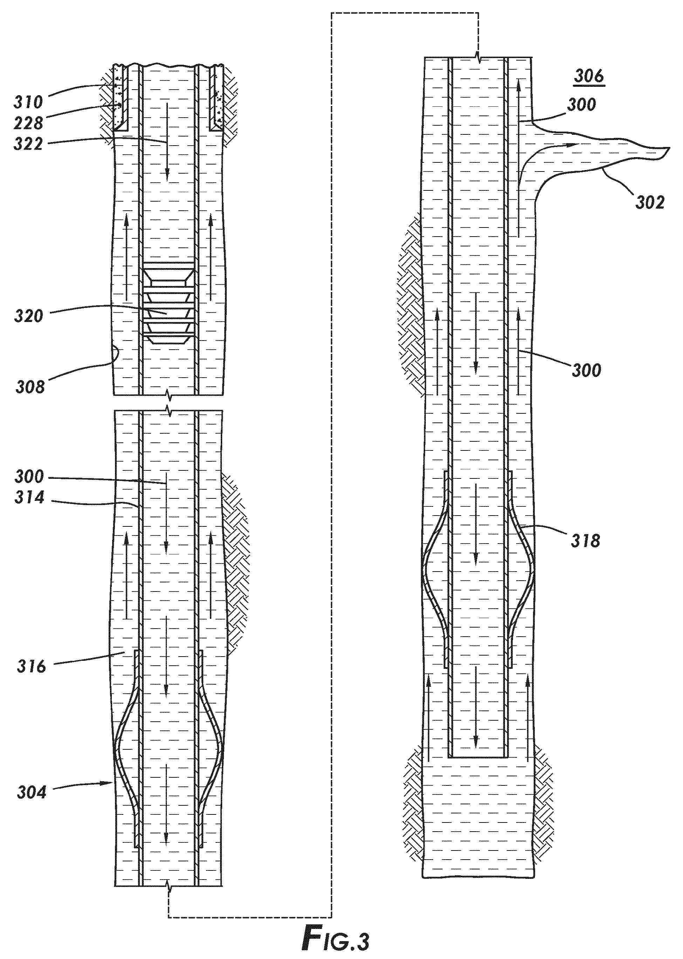

FIG. 3 illustrates an example technique for the placement of a Sorel cement composition 300 as described herein into a subterranean zone, shown as lost circulation zone 302. Such an embodiment may be used, for example, when it is desired to reduce the loss of drilling fluid into a lost circulation zone 302. As illustrated, wellbore 304 may be drilled into the subterranean formation 306. While wellbore 304 is shown extending generally vertically into the subterranean formation 306, the principles described herein are also applicable to wellbores that extend at an angle through the subterranean formation 306, such as horizontal and slanted wellbores. As illustrated, the wellbore 304 includes walls 308 with a lost circulation zone 302. In the illustrated embodiment, a surface casing 310 has been inserted into the wellbore 304. The surface casing 310 may be cemented to the walls 308 of the wellbore 304 by cement sheath 312. In the illustrated embodiment, one or more additional conduits (e.g., pipe string, drill string, production tubing) shown here as conduit 314 may also be disposed in the wellbore 304. As illustrated, there is a wellbore annulus 316 formed between the conduit 314 and the walls 3085 of the wellbore 304. One or more centralizers 318 may be attached to the conduit 314, for example, to centralize the conduit 314 in the wellbore 304 prior to and during the downhole operations.

With continued reference to FIG. 3, the Sorel cement composition 300 may be pumped down the interior of the conduit 314. A plug 320 may separate the Sorel cement composition 300 from a displacement fluid 322 and also push the Sorel cement composition 300 through the conduit 314. The Sorel cement composition 300 may be allowed to flow down the interior of the conduit 314, through the bottom of the conduit 314, and up around the conduit 314 into the wellbore annulus 316. As the Sorel cement composition 300 flows upward through the wellbore annulus 316, Sorel cement composition 300 may flow into lost circulation zone 302 and may become static if sufficiently removed from a shear force. If static, Sorel cement composition 300 may rapidly develop gel strength. Once sufficiently set, Sorel cement composition 300 may then seal lost circulation zone 302 and prevent the loss of any treatment fluids (not shown) that subsequently flow adjacent to lost circulation zone 302. While not illustrated, other techniques may also be utilized for introduction of the Sorel cement composition 300.

Accordingly, this disclosure describes systems, methods, and compositions that may relate to subterranean operations, and, more particularly, to subterranean cementing operations including magnesium oxychloride (Sorel) cement compositions including organically modified clays or silica as water-proofing agents. The systems, methods, and compositions may further be characterized by one or more of the following statements.

Statement 1. A method comprising: introducing a Sorel cement composition into a subterranean formation, wherein the Sorel cement composition comprises an alkaline earth metal oxide, a soluble salt, a water-proofing agent, and water, wherein the water-proofing agent comprises an organically modified clay, crystalline silica, or a combination thereof; and allowing the Sorel cement composition to set in the subterranean formation.

Statement 2. The method of statement 1, wherein the water-proofing agent is present in an amount of about 5% to about 30% by weight of the Sorel cement composition.

Statement 3. The method of statement 1 or statement 2, wherein the crystalline silica is present and has a particle size of about 1 micron to about 500 microns.

Statement 4. The method of statement 3, wherein the crystalline silica is present in an amount of about 5% to about 30% by weight of the Sorel cement composition.

Statement 5. The method of any preceding statement, wherein the organically modified clay is present and comprises organically modified montmorillonite clay.

Statement 6. The method of any preceding statement, wherein the organically modified clay is present in the Sorel cement composition in an amount of about 5% to about 30% by weight of the Sorel cement composition.

Statement 7. The method of any preceding statement, wherein the Sorel cement composition further comprises at least one viscosifier selected from the group consisting of xanthan, diutan, and combinations thereof.

Statement 8. The method of any preceding statement, wherein the alkaline earth metal oxide is present in an amount of about 20% to about 40% by weight of the Sorel cement composition, and wherein the soluble salt is present in an amount of about 20% to about 40% by weight of the Sorel cement composition, and wherein the alkaline earth metal oxide is magnesium oxide, and wherein the soluble salt is magnesium chloride.

Statement 9. The method of any preceding statement, wherein the Sorel cement composition has a metal oxide to soluble salt ratio of about 3:1 to about 1:3.

Statement 10. The method of any preceding statement, wherein the alkaline earth metal oxide comprises magnesium oxide and the soluble salt comprise magnesium chloride.

Statement 11. The method of any preceding statement, wherein the Sorel cement composition is introduced into a lost circulation zone in the subterranean formation and is allowed to set to seal the lost circulation zone.

Statement 12. The method of any one of statements 1 to 10, wherein the Sorel cement composition is introduced into a water-producing zone in the subterranean formation and is allowed to seal the water-producing zone.

Statement 13. The method of any one of statements 1 to 10, wherein the Sorel cement composition sets to seal off one or more subterranean zones.

Statement 14. A method comprising: introducing a cement composition into a formation zone penetrated by a wellbore, wherein the cement composition comprises magnesium oxide, magnesium chloride, a water-proofing agent, a viscosifier, and water, wherein water-proofing agent comprises an organically modified clay, crystalline silica, or any combination thereof; and allowing the cement composition to set in the formation zone.

Statement 15. The method of statement 14, wherein the formation zone comprises a lost circulation zone.

Statement 16. The method of statement 14 or 15, wherein the formation zone comprises a water-producing zone.

Statement 17. The method of any one of statements 14 to 16, wherein the crystalline silica is present in an amount of about 5% to about 30% by weight of the Sorel cement composition, and wherein the crystalline silica has a particle size of about 50 microns to about 200 microns.

Statement 18. The method of any one of statements 14 to 17, wherein the organically modified clay is present in the Sorel cement composition in an amount of about 5% to about 30% by weight of the Sorel cement composition, and wherein the organically modified clay comprises organically modified montmorillonite clay.

Statement 19. A cement composition comprising: an alkaline earth metal oxide; a soluble salt; a water-proofing agent comprising an organically modified clay, a crystalline silica, or any combination thereof; and water.

Statement 20. The cement composition of claim 19, further comprising a viscosifier.

To facilitate a better understanding of the present invention, the following examples of certain aspects of some embodiments are given. In no way should the following examples be read to limit, or define, the entire scope of the disclosure.

**EXAMPLE 1**

This example was performed to evaluate various water-proofing agents. Each test sample included magnesium oxide, magnesium chloride, water, one or more viscosifiers, and a water-proofing agent. Sample No. 1 was a comparative sample and did not include a water-proofing agent. Sample No. 2 was also a comparative test that included siliconate as a conventional water-proofing agent. Sample No. 3 was also a comparative test that included bentonite as a water-proofing agent. Sample Nos. 4-6 included an organically modified clay as a water-proofing agent. The organically modified clay used in these tests was organically modified attapulgite. Sample No. 7 included crystalline silica as a water-proofing agent.

The tests were performed by first mixing the slurry components in the following order: 1) water, 2) viscosifier (diutan or guar), 3) magnesium chloride, 4) water-proofing agent, and 5) magnesium oxide. Each test sample was then allowed to set at 80° C under water for a period of time and then observed. The results of the tests are provided in the table below.

Table 1

| Sample No. | MgO (g) | MgCl2 (g) | Water (g) | Diutan (ppt[1]) | Hydroxy-Propyl Guar (ppt) | Water-Proofing Agent | | Time at 80° C (days) | Results |
|---|---|---|---|---|---|---|---|---|---|
| | | | | | | Type | Concentration | | |
| 1 (Comparative) | 45 | 45 | 30 | 50 | 50 | -- | -- | 2 | Fell Apart (2 tests) |
| 2 (Comparative) | 45 | 45 | 30 | -- | -- | Siliconate | 2.4% vol | 100 | Surface Cracks |
| 3 (Comparative) | 45 | 45 | 30 | 50 | 50 | Bentonite | 3.3% | 2 | Surface Cracks |
| 4 | 45 | 45 | 30 | 10 | -- | Organically Modified Clay | 25% | 100 | Surface Cracks |
| 5 | 45 | 45 | 37.5 | 10 | -- | Organically Modified Clay | 25% | 100 | Surface Cracks |
| 6 | 45 | 45 | 37.5 | 40 | -- | Organically Modified Clay | 25% | 39 | No Cracks |
| 7 | 45 | 45 | 30 | 40 | -- | Crystalline Silica | 8% | 25 | No Cracks |
| [1] ppt refers to pounds per thousand gallons of the water | | | | | | | | | |

EP 4 206 159 A1

As illustrated in Table 1 above, water-proofing agents including silica and/or organically modified provided acceptable results as compared to other water-proofing agents, preventing the set sample from significantly degrading.

**EXAMPLE 2**

The following example was performed to evaluate the compressive strength of set Sorel cements prepared with an organically modified clay as a water-proofing agent. Sample No. 8 was a comparative sample that did not include a water-proofing agent. Samples Nos. 9 and 10 included an organically modified clay as a water-proofing agent. The organically modified clay used in these samples was organically modified attapulgite.

The tests were performed by first mixing the slurry components in the following order: 1) water, 2) viscosifier (diutan), 3) magnesium chloride, 4) water-proofing agent, and 5) magnesium oxide. The samples with the organically modified clay included increased water over the comparative sample as the clay made the samples more viscous, thus requiring additional water. After preparation, the 1-day, 14-day, and 21-day destructive compressive strengths were determined for each test sample at the indicated temperature in accordance with API RP 10B-2, Recommended Practice for Testing Well Cements. The results of the tests are provided in the table below.

Table 2

| Sample No. | Temp. (°C) | MgO (g) | MgCl2 (g) | Water (g) | Diutan (ppt[1]) | Water-Proofing Agent | | UCS Value (psi) | | |
|---|---|---|---|---|---|---|---|---|---|---|
| | | | | | | Type | Concentration (g) | Day 1 | Day 14 | Day 21 |
| 8 (Comparative) | 30 | 45 | 45 | 30 | 10 | -- | -- | 1020 (14 MPa) | 766 (5.3 MPa) | 433 (3 MPa) |
| | | | | | | | | 890 (6.1 MPa) | -- | No recordable CS[2] |
| 9 | 30 | 45 | 45 | 37.5 | 10 | Organically Modified Clay | 11.25 | -- | 256 (1.8 MPa) | 368 (2.5 MPa) |
| 10 | 40 | 45 | 45 | 37.5 | 14 | Organically Modified Clay | -- | 1092 (7.5 MPa) | 1290 (8.9 MPa) | -- |
| | 40 | 45 | 45 | 37.5 | 14 | Organically Modified Clay | -- | 1021 (8.3 MPa) | 1120 (7.7 MPa) | -- |
| 8 (Comparative) | 80 | 45 | 45 | 30 | 10 | -- | -- | 860 (5.9 MPa) | No Recordable CS[2] | -- |
| 9 | 80 | 45 | 45 | 37.5 | 10 | Organically Modified Clay | 6.75 | -- | 130 (0.9 MPa) | 145 (1 MPa) |
| [1] ppt refers to pounds per thousand gallons of the water [2] For the samples with no recordable compressive strength, the sample fell apart and could not be crushed. | | | | | | | | | | |

As illustrated in the Table above, Sorel cement compositions with an organically modified clay are not showing loss of compressive strength over time, while the control test showed over 50% reduction in compressive strength. In addition, the samples with the organically modified clay showed an increase in compressive strength over time in contrast to the comparative samples.

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, whenever a numerical range with a lower limit and an upper limit is disclosed, any number and any included range falling within the range are specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values even if not explicitly recited. Thus, every point or individual value may serve as its own lower or upper limit combined with any other point or individual value or any other lower or upper limit, to recite a range not explicitly recited.

Therefore, the present embodiments are well adapted to attain the ends and advantages mentioned as well as those that are inherent therein. The particular embodiments disclosed above are illustrative only, as the present embodiments may be modified and practiced in different but equivalent manners apparent to those skilled in the art having the benefit of the teachings herein. Although individual embodiments are discussed, all combinations of each embodiment are contemplated and covered by the disclosure. Furthermore, no limitations are intended to the details of construction or design herein shown, other than as described in the claims below. Also, the terms in the claims have their plain, ordinary meaning unless otherwise explicitly and clearly defined by the patentee. It is therefore evident that the particular illustrative embodiments disclosed above may be altered or modified and all such variations are considered within the scope and spirit of the present disclosure.

**Claims**

1. A cement composition comprising:

    an alkaline earth metal oxide;
    a soluble salt;
    a water-proofing agent comprising an organically modified clay, a crystalline silica, or any combination thereof; and
    water.

2. The cement composition of claim 1, wherein the water-proofing agent is present in an amount of about 5% to about 30% by weight of the cement composition.

3. The cement composition of claim 1 or claim 2, wherein the crystalline silica is present and has a particle size of about 1 micron to about 500 microns.

4. The cement composition of claim 3, wherein the crystalline silica is present in an amount of about 5% to about 30% by weight of the cement composition.

5. The cement composition of any preceding claim, wherein the organically modified clay is present and comprises organically modified montmorillonite clay.

6. The cement composition of any preceding claim, wherein the organically modified clay is present in the cement composition in an amount of about 5% to about 30% by weight of the cement composition.

7. The cement composition of any preceding claim, further comprising a viscosifier.

8. The cement composition of any preceding claim, further comprising at least one viscosifier selected from the group consisting of xanthan, diutan, and combinations thereof.

9. The cement composition of any preceding claim, wherein the alkaline earth metal oxide comprises magnesium oxide and the soluble salt comprise magnesium chloride.

10. The cement composition of claim 1, wherein the alkaline earth metal oxide is present in an amount of about 20% to about 40% by weight of the Sorel cement composition, and wherein the soluble salt is present in an amount of about 20% to about 40% by weight of the cement composition, and wherein the alkaline earth metal oxide is magnesium oxide, and wherein the soluble salt is magnesium chloride.

11. The cement composition of any preceding claim, wherein the cement composition has a metal oxide to soluble salt ratio of about 3:1 to about 1:3.

12. A method comprising:

introducing a cement composition according to any preceding claim into a subterranean formation; and allowing the cement composition to set in the subterranean formation.

13. The method of claim 12, wherein the Sorel cement composition is introduced into a lost circulation zone in the subterranean formation and is allowed to set to seal the lost circulation zone.

14. The method of claim 12, wherein the Sorel cement composition is introduced into a water-producing zone in the subterranean formation and is allowed to seal the water-producing zone.

15. The method of claim 12, wherein the Sorel cement composition sets to seal off one or more subterranean zones.

**F**IG.1

**F**IG.2A

*FIG.2B*

310
228
322

320

308

300
314

316

304

306
300

302

300

318

*F*IG.3

Europäisches
Patentamt

European
Patent Office

Office européen
des brevets

# EUROPEAN SEARCH REPORT

**Application Number**

EP 21 21 8370

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 292 273 A (ANHUI RUIAO CONCRETE CO LTD) 24 August 2021 (2021-08-24) * claims 1-9; example 1 * ----- | 1,5,7 | INV. C04B28/10 C04B28/30 C04B28/32 C09K8/467 |
| X | LAUERMANNOVÁ ANNA-MARIE ET AL: "High-performance magnesium oxychloride composites with silica sand and diatomite", JOURNAL OF MATERIALS RESEARCH AND TECHNOLOGY, vol. 11, 1 March 2021 (2021-03-01), pages 957-969, XP055932460, BR ISSN: 2238-7854, DOI: 10.1016/j.jmrt.2021.01.028 Retrieved from the Internet: URL:https://www.sciencedirect.com/science/article/pii/S2238785421000284/pdfft?md5=0964bbe7f6c8824c7bca11d68dea8740&pid=1-s2.0-S2238785421000284-main.pdf> * chapter "Experimental"; examples MOC-Ref - MOC-D15; table 1 * * chapters "Results and discussion" and "Conclusions"; tables 2, 6, 7 * ----- | 1-4,7,9-11 | |
| X Y | AT 208 761 B (GOUDGE MONSON FRASER) 25 April 1960 (1960-04-25) * page 1, lines 24-57; claims 1-3; example 7 * * page 1, line 86 - page 2, line 21 * * page 2, lines 21-76 * ----- | 1-4,6,7,9-15 8 | TECHNICAL FIELDS SEARCHED (IPC) C04B C09K |
| A | US 2008/169100 A1 (LEWIS SAM [US] ET AL) 17 July 2008 (2008-07-17) * paragraph [0016] - paragraph [0021]; claims 1-22; examples 1-2 * ----- -/-- | 12-15 | |

The present search report has been drawn up for all claims

| Place of search | Date of completion of the search | Examiner |
|---|---|---|
| The Hague | 17 June 2022 | Büscher, Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

**EP 21 21 8370**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2015/191071 A1 (HALLIBURTON ENERGY SERVICES INC [US]) 17 December 2015 (2015-12-17) | 8 | |
| A | * page 5, line 32 – page 8, line 11; claims 11-20; tables 1-5 * <br> * page 8, line 28 – page 10, line 5 * <br> ----- | 12-15 | |

**TECHNICAL FIELDS SEARCHED (IPC)**

The present search report has been drawn up for all claims

| Place of search | Date of completion of the search | Examiner |
|---|---|---|
| The Hague | 17 June 2022 | Büscher, Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 8370

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2022

| Patent document cited in search report | | Publication date | Patent family member(s) | | Publication date |
|---|---|---|---|---|---|
| CN 113292273 | A | 24-08-2021 | NONE | | |
| AT 208761 | B | 25-04-1960 | NONE | | |
| US 2008169100 | A1 | 17-07-2008 | NONE | | |
| WO 2015191071 | A1 | 17-12-2015 | AR | 096879 A1 | 03-02-2016 |
| | | | GB | 2541548 A | 22-02-2017 |
| | | | US | 2017073567 A1 | 16-03-2017 |
| | | | WO | 2015191071 A1 | 17-12-2015 |

EPO FORM P0459